# EUROPÄISCHE PATENTSCHRIFT

(11) **EP 3 530 158 B1**
(45) Veröffentlichungstag und Bekanntmachung des Hinweises auf die Patenterteilung: **03.11.2021**
(21) Anmeldenummer: 18159013.4
(22) Anmeldetag: 27.02.2018
(51) Int. Cl.: A47J 36/32, A47J 43/07

(54) **KOCHMANAGEMENT-VERFAHREN, KÜCHENMASCHINE SOWIE SYSTEM ZUM DURCHFÜHREN EINES KOCHVORGANGS**
COOKING MANAGEMENT METHOD, KITCHEN MACHINE, AND SYSTEM FOR PERFORMING A COOKING PROCESS
PROCÉDÉ DE GESTION DE CUISSON, ROBOT DE CUISINE, AINSI QUE SYSTÈME DESTINÉ À LA MISE EN OEUVRE D'UN PROCESSUS DE CUISSON

(43) Veröffentlichungstag der Anmeldung: 28.08.2019
(73) Patentinhaber: Vorwerk & Co. Interholding GmbH, 42270 Wuppertal (DE)
(72) Erfinder: Koetz, Hendrik, 58300 Wetter (DE); Kraut-Reinkober, Stefan, 51375 Leverkusen (DE); Mosebach, Andrej, 44809 Bochum (DE); Pieper, Mirco, 42287 Wuppertal (DE); Reindl, Anton, 82467 Garmisch-Partenkirchen (DE); Stach, Christiane, 42477 Radevormwald (DE); Yan, Wenjie, 40549 Düsseldorf (DE); Werhahn, Sarah, 8038 Zürich (CH)
(74) Vertreter: Patentanwälte Bals & Vogel

(56) Entgegenhaltungen:
- DE-A1-102015 103 596

## Beschreibung

Die Erfindung betrifft ein Kochmanagement-Verfahren zur Planung eines Kochvorgangs einer Küchenmaschine, eine Küchenmaschine gemäß dem Oberbegriff des Anspruchs 14 sowie ein System zum Durchführen eines Kochvorgangs gemäß dem Oberbegriff des Anspruchs 15.

Es ist bekannt, dass immer mehr Abläufe des täglichen Lebens miteinander verflochten werden, um insbesondere auch im Privatleben Effizienz und Komfort zu verbessern. Viele Menschen möchten gerne mehr Raum für Freizeitaktivitäten schaffen oder versuchen - trotz eines zeitintensiven Berufs - noch Freizeit genießen zu können. Obwohl das Ernährungsbewusstsein insgesamt in das öffentliche Bewusstsein gerückt ist, wird eine gesunde Art des Kochens im Alltagsstress häufig aus Zeitgründen als Erstes vernachlässigt. Daher ist es wünschenswert einen Kochvorgang möglichst effizient in das alltägliche Leben zu integrieren, so dass dem Benutzer noch genügend Zeit für Freiräume bleibt.

So ist es aus der DE 10 2014 211 094 B4 bekannt, ein Haushaltsgerät mit einem Fernseher zu verbinden und Betriebsgeräusche auf das Fernsehverhalten abzustimmen. Dabei kann jedoch noch immer eine hohe Hemmschwelle des Benutzers gegeben sein, aufwendiges Essen zuzubereiten, da er sich selbst um die Zeitplanung kümmern, Informationen über die Dauer des Rezeptes und des Fernsehprogramms einholen und diese schließlich aufeinander abstimmen muss.

Aus der DE 10 2015 103 596 A1 ist ein Verfahren zum Betrieb einer elektromotorisch angetriebenen Küchenmaschine bekannt. Dabei ist die Küchenmaschine in ein Datenkommunikationsnetzwerk eingebunden, in welches auch ein Laptop eingebracht sein kann. Beim Kochen messen Sensoren die aktuellen Zustandsparameter des Zubereitungsgutes. Über ein Datenkommunikationsnetzwerk werden dabei die Zustandsparameter mit einer Datenbank abgeglichen, sodass bei einer zu großen Abweichung ein Korrekturvorschlag ausgegeben werden kann. Über den Korrekturvorschlag wird der Nutzer angehalten, eine Einstellung der Küchenmaschine beim Kochen zu ändern, um das gewünschte Ergebnis des Rezeptes möglichst optimal zu erzielen.

Es ist daher eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Integration einer Zubereitung von Speisen in eine Freizeitgestaltung eines Benutzers zu vereinfachen und in Hinblick auf Komfort und/oder Zeiteffizienz zu verbessern.

Die voranstehende Aufgabe wird gelöst durch ein Kochmanagement-Verfahren mit den Merkmalen des Anspruchs 1, eine Küchenmaschine mit den Merkmalen des Anspruchs 14, sowie ein System zum Durchführen eines Kochvorgangs mit den Merkmalen des Anspruchs 15.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Kochmanagement-Verfahren beschrieben worden sind, selbstverständlich auch im Zusammenhang mit der erfindungsgemäßen Küchenmaschine und/oder dem erfindungsgemäßen System und jeweils umgekehrt, so dass bezüglich der Offenbarung zu den einzelnen Erfindungsaspekten stets wechselseitig Bezug genommen wird bzw. werden kann. Erfindungsgemäß umfasst das Kochmanagement-Verfahren zur Planung eines Kochvorgangs einer Küchenmaschine folgende Schritte:
- Bestimmen eines Unterhaltungsprogramms eines Unterhaltungsgerätes,
- Bestimmen eines Planungsintervalls, in welchem zumindest ein Benutzer der Küchenmaschine zum Genuss des Unterhaltungsprogramms zumindest teilweise an das Unterhaltungsgerät gebunden ist,
- Erstellen einer Planung des Kochvorgangs in Abhängigkeit von dem Planungsintervall.

Unter dem Genuss des Unterhaltungsprogramms kann vorzugsweise verstanden werden, dass der Benutzer das Unterhaltungsprogramm nutzt, um beispielsweise seine Freizeit oder seine Fortbildung oder dergleichen zu gestalten oder sogar zu entspannen. Insbesondere handelt es sich bei dem Unterhaltungsprogramm um eine Funktion des Unterhaltungsgerätes. Vorzugsweise handelt es sich bei dem Unterhaltungsgerät um ein elektronisches Unterhaltungsgerät. Das Unterhaltungsgerät kann beispielsweise einen Fernseher, insbesondere ein Smart-TV, eine Spielekonsole, ein Tablet, einen Computer, ein Fitnessgerät und/oder dergleichen umfassen. Unter dem Planungsintervall kann vorzugsweise eine zukünftige oder bereits begonnene Zeitspanne verstanden werden. Dabei kann das Planungsintervall beispielsweise an eine Uhrzeit oder ein Ereignis gebunden sein. So ist es denkbar, dass das Planungsintervall mit einem Startzeitpunkt des Unterhaltungsprogramms korrespondiert, welcher das das Planungsintervall auslösende Ereignis darstellt. Ferner ist es denkbar, dass das Ereignis eine Werbepause während des Unterhaltungsprogramms oder das Ende eines Fußballspiels umfasst. Insbesondere kann das Planungsintervall auch die Zeitspanne widerspiegeln, in welcher das Unterhaltungsprogramm vorgesehen ist.

Der Kochvorgang kann vorteilhafterweise einen, insbesondere automatisierten oder teilweise automatisierten, Rezeptablauf umfassen. Der Rezeptablauf kann dabei verschiedene Schritte zum Zubereiten eines Gerichtes mittels eines Rezeptes aufweisen. Ferner kann der Rezeptablauf auf der direkt durch eine Steuereinheit der Küchenmaschine oder durch einen externen, z.B. über das Internet an die Küchenmaschine angebundenen, Server gesteuert werden. Dazu kann vorgesehen sein, dass der Benutzer zunächst ein Rezept für den Kochvorgang bestimmt, insbesondere aus einer vorhandenen Rezeptsammlung auswählt.

Dass die Planung des Kochvorgangs in Abhängigkeit des Planungsintervalls erstellt wird, hat somit den Vorteil, dass der Kochvorgang in den täglichen Ablauf eines Benutzers effizient und komfortabel eingebunden werden kann und der Benutzer in seinem Zeitmanagement unterstützt wird. Somit kann die Planung des Kochvorgangs im Rahmen des erfindungsgemäßen Kochmanagement-Verfahrens insbesondere zeitlich in Abhängigkeit des Planungsintervalls erfolgen, welches wiederum mit dem Unterhaltungsprogramm korrespondiert. Insbesondere in Kombination mit einer zumindest teilweise automatisierten Küchenmaschine können somit beispielsweise einzelne Schritte eines auszuführenden Rezeptes durchgeführt oder vorbereitet werden. So ist es beispielsweise denkbar, dass Wasser bereits erhitzt wird, so dass der Benutzer am Ende oder während einer Pause des Unterhaltungsprogramms sofort Nudeln hinzugeben kann, um diese zu kochen. Dadurch kann wiederum die Zeit des Erhitzens des Wassers eingespart werden, wenn dieser Schritt parallel zum Unterhaltungsprogramm abläuft. Ferner kann ein Ein- und Ausschalten der Küchenmaschine zu bestimmten Zeitpunkten vorgebbar sein. Es ist aber auch denkbar, dass die Planung von einzelnen Schritten oder dem gesamten Rezeptablauf dem Benutzer lediglich vorgegeben wird. Dabei können die einzelnen Schritte entsprechend z.B. während Unterbrechungen des Unterhaltungsprogramms oder dergleichen vorgesehen sein. Es kann beispielsweise vom Benutzer zuvor vorgegeben werden, dass er plant das Unterhaltungsprogramm zu einem bestimmten Zeitpunkt zu nutzen, so dass die Planung des Kochvorgangs entsprechend das Unterhaltungsprogramm berücksichtigen kann. Es ist jedoch auch denkbar, dass die Planung des Kochvorgangs erst nach Aufruf des Unterhaltungsprogramms angepasst wird.

Vorzugsweise kann bei einem erfindungsgemäßen Kochmanagement-Verfahren vorgesehen sein, dass das Unterhaltungsprogramm ein Streaming-Angebot, ein TV-Programm, ein Computerspiel, ein Lernprogramm und/oder ein Radioprogramm umfasst. Unter einem Streaming-Angebot kann beispielsweise ein Programm-Angebot von Filmen, Musik, Hörbüchern und/oder dergleichen verstanden werden, welches von einem externen Streaming-Dienst insbesondere über das Internet zur Verfügung gestellt wird. Dabei ist es denkbar, dass der Benutzer das Streaming-Angebot individuell aufruft und die Planung des Kochvorgangs entsprechend des Streaming-Angebotes angepasst wird. Insbesondere kann das Unterhaltungsprogramm somit auf insbesondere elektronischen Medien basieren, welche einen Benutzer unterhalten und/oder informieren. Somit hat der Benutzer die Möglichkeit alltägliche Unterhaltungsmedien zu nutzen und den Kochvorgang entsprechend in den Zeitablauf einzubinden.

Es ist ferner denkbar, dass bei einem erfindungsgemäßen Kochmanagement-Verfahren das Bestimmen des Planungsintervalls durch eine Auswertung zumindest einer Informationsquelle erfolgt. Vorzugsweise kann dabei die zumindest eine Informationsquelle eine Benutzerschnittstelle, eine Unterhaltungshistorie, einen elektronischen Programmführer (EPG), einen Internetdienst und/oder einen Benutzerkalender umfassen. Die Auswertung kann vorteilhafterweise ein Empfangen und/oder eine Verarbeitung von Daten der Informationsquelle umfassen. Somit kann beispielsweise auf eine Informationsquelle des Unterhaltungsgerätes zugegriffen werden, um insbesondere zeitliche Daten zum Unterhaltungsprogramm zu erhalten. Die Unterhaltungshistorie kann Informationen über ein Benutzerverhalten umfassen. So ist es denkbar, dass die Unterhaltungshistorie eine Liste mit zuvor aufgerufenen Unterhaltungsprogrammen aufweist. Insbesondere kann dabei eine Mustererkennung vorgesehen sein, durch welche bestimmte Gewohnheiten des Benutzers identifizierbar und dadurch für die Zukunft antizipierbar sein können. Geht aus der Unterhaltungshistorie beispielsweise hervor, dass der Benutzer regelmäßig Nachrichtensendungen schaut, kann auch ohne zusätzliche Benutzereingabe die Nachrichtensendung in den Kochvorgang eingeplant werden. Ferner ist es denkbar, dass der Benutzerkalender zur Auswertung herangezogen wird, so dass Termine des Benutzers ebenfalls in das Erstellen der Planung des Kochvorgangs einfließen können und/oder der Benutzer seine Planung des Unterhaltungsprogramms durch den Benutzerkalender beispielsweise der Küchenmaschine oder einem externen Server zum Bestimmen des Planungsintervalls zur Verfügung stellen kann. Über einen elektronischen Programmführer kann vorzugsweise ein TV-Programm abrufbar sein, insbesondere ohne dass eine Verbindung mit dem Internet notwendig ist. Die Nutzung eines Internetdienstes als Informationsquelle hat ferner den Vorteil, dass komplexe Datenzusammenhänge übermittelt werden können und/oder z.B. Dienste von Anbietern im Internet bei der Bestimmung des Planungsintervalls berücksichtigt werden können. Weitere Informationsquellen können beispielsweise durch einen Live-Blog im Internet, Online-TV-Zeitschriften und/oder Festplattenrekorder darstellen.

Vorzugsweise kann bei einem erfindungsgemäßen Kochmanagement-Verfahren vorgesehen sein, dass das Erstellen der Planung des Kochvorgangs das Bestimmen eines Startzeitpunktes zum Start des Kochvorgangs umfasst. Vorzugsweise kann dabei der Startzeitpunkt als Vorschlag ausgegeben werden und/oder der Kochvorgang zum Startzeitpunkt automatisch gestartet werden. So ist es denkbar, dass sich der Kochvorgang unmittelbar an das Ende des Unterhaltungsprogramms anschließen soll und somit der Startzeitpunkt entsprechend geplant wird. Wird der Startzeitpunkt als Vorschlag ausgegeben, kann beispielsweise vorgesehen sein, dass der Benutzer den Startzeitpunkt ändert. Ferner ist es denkbar, dass eine Auswahl mehrerer Startzeitpunkte ausgegeben wird, welche unter unterschiedlichen Kriterien anhand des Planungsintervalls und/oder Unterhaltungsprogramms ermittelt werden, so dass der Benutzer einen der Startzeitpunkte auswählen kann. Somit kann durch einen Vorschlag des Startzeitpunktes einem Benutzer eine Unterstützung bei der Planung des Kochvorgangs gewährleistet werden und dem Benutzer gleichzeitig eine hohe individuelle Freiheit bei der Ausführung gegeben werden. Wird der Kochvorgang zum Startzeitpunkt automatisch gestartet, kann einem Benutzer ferner ein weiterer Arbeitsschritt abgenommen werden, so dass es nicht oder nur in geringem Maße notwendig ist, dass der Benutzer sich zumindest zu Beginn des Kochvorgangs um den Kochvorgang kümmert. Insbesondere kann der Startzeitpunkt ferner an bestimmte Ereignisse, wie z.B. das Beenden des Unterhaltungsprogramms durch den Benutzer, eine Werbepause oder dergleichen, geknüpft sein.

Vorteilhafterweise kann bei einem erfindungsgemäßen Kochmanagement-Verfahren das Erstellen der Planung des Kochvorgangs ferner das Bestimmen eines Endzeitpunktes zum Fertigstellen des Kochvorgangs umfassen. Vorzugsweise kann dabei der Endzeitpunkt als Vorschlag ausgegeben werden und/oder der Kochvorgang zu dem Endzeitpunkt automatisch abgeschlossen werden. Es ist denkbar, dass der Kochvorgang zu einer bestimmten Programmphase, wie unmittelbar zum Ende des Unterhaltungsprogramms, abgeschlossen sein soll und somit der Endzeitpunkt entsprechend geplant wird. Ferner ist es denkbar, dass der Endzeitpunkt zu Beginn einer Programmpause geplant wird, so dass der Benutzer z.B. in der Halbzeitpause eines Fußballspiels die Speisen zu sich nehmen kann.

Ferner kann bei einem erfindungsgemäßen Kochmanagement-Verfahren vorgesehen sein, dass das Erstellen der Planung des Kochvorgangs das Bestimmen von zumindest einer Zwischenstufe des Kochvorgangs umfasst, in welcher eine Benutzerinteraktion zur weiteren Durchführung des Kochvorgangs erforderlich ist. Insbesondere kann dabei der Benutzer automatisch über ein tatsächliches und/oder planmäßiges Erreichen der zumindest einen Zwischenstufe benachrichtigt werden. Somit kann der Kochvorgang auch dann vorteilhaft in die Zeitplanung des Benutzers eingebunden werden, wenn zwischendurch zumindest eine Benutzerinteraktion notwendig ist. So ist es beispielsweise denkbar, dass bestimmte Schritte in einem Rezeptablauf durch die Küchenmaschine automatisch durchgeführt werden, es aber erforderlich ist, dass der Benutzer zwischenzeitlich Zutaten hinzugibt. Dies kann durch die Zwischenstufe abgebildet sein, welche beispielsweise mit einer Programmunterbrechung korrespondieren kann oder zwischen zwei geplanten Unterhaltungsprogrammen vorgesehen werden kann. Die Benachrichtigung kann vorzugsweise das Senden einer Nachricht an ein mobiles Endgerät, wie ein Smartphone oder Tablet, des Benutzers umfassen und/oder über eine Ausgabeeinheit erfolgen, beispielsweise indem ein Benachrichtigungston abgespielt wird und/oder die Benachrichtigung auf einem Display der Küchenmaschine angezeigt wird. Insbesondere kann die Benachrichtigung eine Vorabanweisung umfassen, so dass dem Benutzer z. B. schon vor Start des Unterhaltungsprogramms mitgeteilt wird, dass in der ersten Werbepause die Hinzugabe einer weiteren Zutat erforderlich ist.

Im Rahmen der Erfindung kann ferner vorgesehen sein, dass das Bestimmen des Planungsintervalls und/oder das Erstellen der Planung des Kochvorgangs in Abhängigkeit von Navigationsdaten erfolgt, insbesondere wobei die Navigationsdaten Verkehrsdaten und/oder einen Standort des zumindest einen Benutzers umfassen. Der Standort des Benutzers kann beispielsweise GPS-Informationen, insbesondere eine GPS-Position, aufweisen, welche für die Planung des Kochvorgangs zur Verfügung gestellt werden können. Aus dem Standort und/oder den Navigationsdaten kann daraufhin vorteilhafterweise bestimmt werden, wann der Benutzer zum Ausführen weiterer Schritte des Rezeptablaufs und/oder zum Starten des Unterhaltungsprogramms vor Ort sein wird. Bei den Verkehrsdaten kann es sich um allgemeine Verkehrsdaten handeln, welche die vom Benutzer oder von mehreren Benutzern zurückzulegende Strecke und/oder Kartendaten umfassen. Die Verkehrsdaten können vorzugsweise Informationen über aktuelle Staus, Verspätungen bei öffentlichen Verkehrsmitteln und/oder dergleichen zur Verfügung stellen.

Vorzugsweise können die Navigationsdaten bei einem erfindungsgemäßen Kochmanagement-Verfahren öffentliche Verkehrsdaten umfassen. Insbesondere können die öffentlichen Verkehrsdaten dabei aus einem öffentlichen Informationssystem gewonnen werden. Das öffentliche Informationssystem kann beispielsweise Kartendaten, Verbindungen öffentlicher Verkehrsmittel und/oder weitere Navigationsdaten bereitstellen. Insbesondere können die öffentlichen Verkehrsdaten durch Dienste von Drittanbietern bereitgestellt und/oder über das Internet abgerufen werden. Dadurch kann eine hohe Aktualität der Daten gewährleistet werden, insbesondere wenn die öffentlichen Verkehrsdaten regelmäßig aktualisiert werden und/oder in Echtzeit von dem öffentlichen Informationssystem abgerufen werden. Das öffentliche Informationssystem kann vorzugsweise eine Internetplattform, einen Verkehrsfunk, Fahrpläne und/oder dergleichen umfassen.

Im Rahmen der Erfindung ist es ferner denkbar, dass das Bestimmen des Planungsintervalls und/oder das Erstellen der Planung des Kochvorgangs in Abhängigkeit von Aktivitätsdaten erfolgt, insbesondere wobei die Aktivitätsdaten zur zumindest teilweisen Bestimmung der Navigationsdaten herangezogen werden. Vorzugsweise umfassen die Aktivitätsdaten Informationen über Tätigkeiten und/oder Aufenthaltsorte des Benutzers. Insbesondere können die Aktivitätsdaten Daten zu Veranstaltungen umfassen, welche der Benutzer besucht, Informationen zu Schul- und Ferientagen oder dergleichen. So ist es denkbar, dass zusätzlich zum Unterhaltungsprogramm weitere Programmpunkte im Tagesablauf des Benutzers berücksichtigt werden können, um die Zubereitung der Speisen möglichst effizient in den Tagesablauf einzubetten. Dadurch kann dem Benutzer ein Teil seiner Terminplanung in komfortabler Art und Weise abgenommen bzw. für ihn abgestimmt werden. Bei der Verknüpfung der Aktivitätsdaten mit den Navigationsdaten ist es ferner denkbar, dass auch ein An- und Abfahrtsweg zu Veranstaltungen mit eingebunden werden kann.

Durch die Integration weiterer Daten, insbesondere von Navigationsdaten und/oder Aktivitätsdaten, kann die Planung des Kochvorgangs insbesondere kontinuierlich synchronisiert werden. Somit kann beispielsweise die Planung des Kochvorgangs dahingehend beeinflusst werden, ob der Kochvorgang noch vor dem Unterhaltungsprogramm oder danach abgeschlossen wird. Verspätet sich der Benutzer kann z.B. von einem zunächst vor dem Unterhaltungsprogramm geplanten Kochvorgang zu einem anschließenden oder parallelen Kochvorgang umgeplant werden.

Weiterhin kann bei einem erfindungsgemäßen Kochmanagement-Verfahren vorgesehen sein, dass die Aktivitätsdaten und/oder die Navigationsdaten und/oder unterschiedliche Unterhaltungsprogramme mehreren Benutzern zugeordnet sind, wobei das Bestimmen des Planungsintervalls und/oder das Planen des Kochvorgangs für eine Benutzergemeinschaft erfolgt. Somit ist es denkbar, dass die Planung des Kochvorgangs beispielsweise für eine Familie erfolgt, wobei jedem Familienmitglied eigene Aktivitätsdaten, eigene Navigationsdaten und/oder eigene Unterhaltungsprogramme zuordbar sind. Insbesondere können dadurch die Essenszeiten der einzelnen Familienmitglieder unter Berücksichtigung der jeweiligen Freizeitgestaltungen aufeinander abgestimmt werden, so dass die Familienmitglieder gemeinsam essen können und/oder die Küchenmaschine jedem in einem bestimmten Zeitfenster zur Verfügung steht. Vorzugsweise können die Aktivitätsdaten, Navigationsdaten und/oder das Unterhaltungsprogramm mit unterschiedlichen Benutzerkonten verknüpft sein, wobei mehrere Benutzerkonten eine Benutzergemeinschaft bilden können. Ferner ist es denkbar, dass mehrere Benutzerkonten mit einem bestimmten Unterhaltungsprogramm oder einem dem Unterhaltungsprogramm zugeordneten Ereignis verknüpft werden. So ist es beispielsweise denkbar, dass ein Ereignis in Form eines gemeinsamen Länderspielabends geplant wird und mehrere Benutzerkonten mit dem Ereignis verknüpft werden, wobei das Erstellen der Planung des Kochvorgangs entsprechend der Daten der Benutzer abgestimmt wird. Dabei kann z.B. eine Ankunft der einzelnen Benutzer berücksichtigt werden. Somit kann durch das Kochmanagement-Verfahren eine soziale Interaktion in Bezug auf die gemeinsame Planung vereinfacht sein.

Es ist ferner bei einem erfindungsgemäßen Kochmanagement-Verfahren denkbar, dass das Kochmanagement-Verfahren folgende Schritte umfasst:
- Herstellen einer Geräteverbindung zwischen der Küchenmaschine und dem Unterhaltungsgerät,
- Abrufen von Informationen über das Unterhaltungsprogramm von dem Unterhaltungsgerät über die Geräteverbindung.

Bei der Geräteverbindung kann es sich vorzugsweise eine direkte oder indirekte Verbindung der Küchenmaschine mit dem Unterhaltungsgerät handeln. Beispielsweise kann die Küchenmaschine kabelgebunden oder kabellos mit dem Unterhaltungsgerät verbunden oder gekoppelt sein. Insbesondere kann die Geräteverbindung eine Ethernet-Verbindung, Bluetooth-Verbindung, WLAN-Verbindung und/oder dergleichen umfassen. Dadurch können benötigte Daten vorzugsweise durch die Küchenmaschine direkt vom Unterhaltungsgerät abgerufen werden. Dadurch kann es beispielsweise nicht notwendig sein, die Küchenmaschine oder das Unterhaltungsgerät an eine Internetverbindung anzuschließen. Insbesondere kann der Benutzerkomfort ferner durch eine intuitiv bedienbare Kopplung gesteigert sein.

Im Rahmen der Erfindung kann weiterhin vorgesehen sein, dass das Kochmanagement-Verfahren folgende Schritte umfasst:
- Herstellen einer Netzwerkverbindung der Küchenmaschine mit einem Server,
- Abrufen von Daten von dem Server, wobei die Daten Informationen über das Unterhaltungsprogramm und/oder die Navigationsdaten umfassen.

Die Netzwerkverbindung kann vorzugsweise eine Internetverbindung, LAN-Verbindung und/oder eine WLAN-Verbindung umfassen. Insbesondere kann die Küchenmaschine eine Netzwerkschnittstelle zum Herstellen der Netzwerkverbindung mit dem Server aufweisen. Das Unterhaltungsgerät kann eine weitere Netzwerkschnittstelle aufweisen, um Daten zum Unterhaltungsprogramm zur Verfügung zu stellen. Es ist jedoch ebenfalls denkbar, dass die Daten zum Unterhaltungsprogramm vom Server zur Verfügung gestellt werden, während das Unterhaltungsgerät nicht mit dem Internet verbunden ist. Dies ist beispielsweise beim Abrufen von Programminformationen zu einen TV-Programm denkbar, wenn die Daten zum TV-Programm von dem Server bereitgestellt werden, ein Fernseher das TV-Programm jedoch unabhängig von einer Internetverbindung empfangen kann.

Vorzugsweise kann bei einem erfindungsgemäßen Kochmanagement-Verfahren das Bestimmen des Unterhaltungsprogramms zumindest einen der folgenden Schritte umfasst:
- Erhalten einer Auswahl des Unterhaltungsprogramms durch den zumindest einen Benutzer,
- Erhalten einer Beeinflussung der Planung des Kochvorgangs durch den zumindest einen Benutzer.

Es ist beispielsweise denkbar, dass der Benutzer die Planung des Kochvorgangs nach Erstellung noch einmal verändern möchte und diese, insbesondere über eine Benutzerschnittstelle, beeinflusst. Das entsprechende Steuersignal kann dabei durch die Benutzerschnittstelle in Abhängigkeit von der Benutzereingabe generiert werden.

Durch die Auswahl des Unterhaltungsprogramms durch den zumindest einen Benutzer, ist es beispielsweise nicht notwendig, eine Unterhaltungshistorie zu erfassen und auszuwerten, so dass Rechen- und Speicherkapazität reduziert ausgeführt sein können. Ferner kann durch die Interaktionsmöglichkeit des Benutzers mit der Küchenmaschine der Benutzerkomfort verbessert sein, insbesondere wenn der Benutzer jederzeit in das Kochmanagement-Verfahren eingreifen kann, um individuelle Wünsche bezüglich der Planung des Kochvorgangs zu berücksichtigen.

Gemäß einem weiteren Aspekt der Erfindung ist eine Küchenmaschine zum Zubereiten von Speisen beansprucht. Die Küchenmaschine weist dabei eine Steuereinheit zur elektronischen Datenverarbeitung auf. Ferner ist durch die Steuereinheit ein erfindungsgemäßes Kochmanagement-Verfahren initiierbar, insbesondere durchführbar. Bei der Küchenmaschine kann es sich vorteilhafterweise um eine elektromotorische Küchenmaschine handeln, durch welche ein Kochvorgang zumindest teilweise automatisch durchführbar ist. Dazu kann die Küchenmaschine zumindest ein Rührwerk, eine Waage (zur Gewichtserfassung) und/oder ein Heizelement umfassen, um Speisen automatisch zu vermengen und/oder zu garen. Unter der Initiierung des Kochmanagement-Verfahrens kann vorzugsweise verstanden werden, dass das Kochmanagement-Verfahren an der Küchenmaschine ausgelöst oder gestartet wird. Dabei können die weiteren Schritte des Verfahrens auf der Küchenmaschine selbst oder auf einem externen Server durchgeführt werden, welcher mit der Küchenmaschine, beispielsweise über eine Netzwerkverbindung, in Kommunikationsverbindung steht. Insbesondere ist es auch denkbar, dass das Kochmanagement-Verfahren teilweise auf der Küchenmaschine und teilweise auf dem Server durchgeführt wird. Bei einer Ausführung von Schritten des Verfahrens auf dem Server kann Rechen- und Speicherkapazität eingespart werden, so dass die Steuereinheit klein dimensioniert sein kann. Ferner kann durch die Verarbeitung auf einem Server eine hohe Aktualität der Verarbeitungsschritte und/oder Daten gewährleistet werden, so dass der Benutzerkomfort weiter verbessert sein kann. Ferner bringt eine erfindungsgemäße Küchenmaschine die gleichen Vorteile mit sich, wie sie bereits ausführlich mit Bezug auf ein erfindungsgemäßes Kochmanagement-Verfahren beschrieben worden sind. Gemäß einem weiteren Aspekt der Erfindung ist ein System zum Durchführen eines Kochvorgangs beansprucht. Das System weist eine Küchenmaschine, insbesondere eine erfindungsgemäße Küchenmaschine, zum Zubereiten von Speisen und einen Server, der mit der Küchenmaschine in Kommunikationsverbindung bringbar ist, auf. Durch den Server ist ein erfindungsgemäßes Kochmanagement-Verfahren zumindest teilweise oder vollständig durchführbar. Somit bringt ein erfindungsgemäßes System die gleichen Vorteile mit sich, wie sie bereits ausführlich mit Bezug auf ein erfindungsgemäßes Kochmanagement-Verfahren und/oder eine erfindungsgemäße Küchenmaschine beschrieben worden sind. Die Kommunikationsverbindung kann vorzugsweise eine Netzwerkverbindung, insbesondere Internetverbindung, umfassen.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Dabei ist zu beachten, dass die Figuren nur beschreibenden Charakter haben und nicht dazu gedacht sind, die Erfindung in irgendeiner Form einzuschränken. Es zeigen:
- Fig. 1: ein erfindungsgemäßes Kochmanagement-Verfahren in schematischer Darstellung der Verfahrensschritte in einem ersten Ausführungsbeispiel,
- Fig. 2: eine Zeitplanung des erfindungsgemäßen Kochmanagement-Verfahrens des ersten Ausführungsbeispiels in schematischer Darstellung,
- Fig. 3: ein erfindungsgemäßes System zum Ausführen eines erfindungsgemäßen Kochmanagement-Verfahrens in schematischer Darstellung in einem weiteren Ausführungsbeispiel,
- Fig. 4: Daten, die einer erfindungsgemäßen Küchenmaschine bereitgestellt werden in schematischer Darstellung in einem weiteren Ausführungsbeispiel,
- Fig. 5: Daten, die einer erfindungsgemäßen Küchenmaschine bereitgestellt werden in schematischer Darstellung in einem weiteren Ausführungsbeispiel.

In den nachfolgenden Figuren werden für die gleichen technischen Merkmale auch von unterschiedlichen Ausführungsbeispielen die identischen Bezugszeichen verwendet.

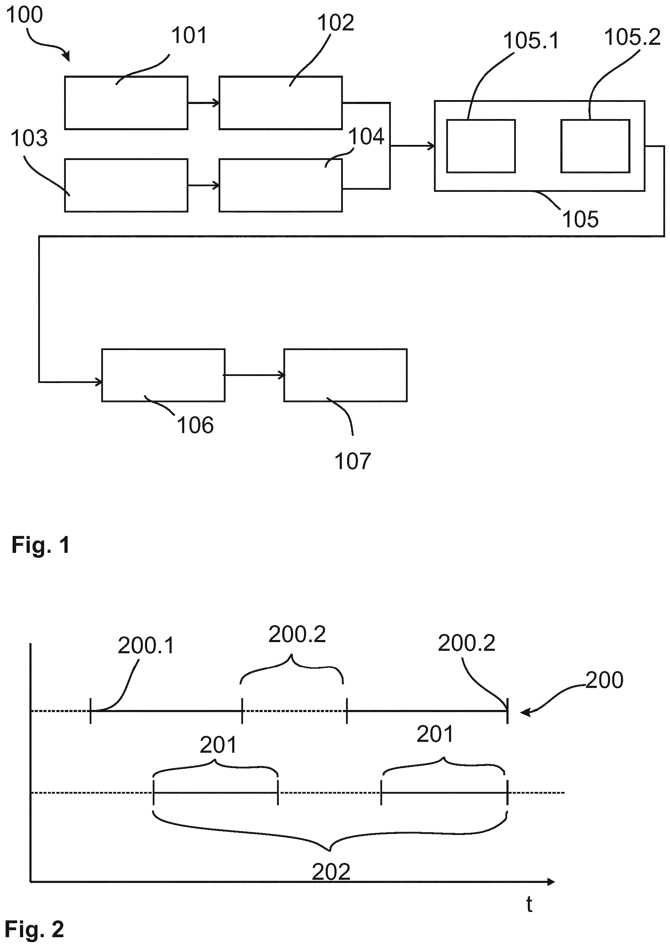

Fig. 1 zeigt ein erfindungsgemäßes Kochmanagement-Verfahren 100 in schematischer Darstellung der Verfahrensschritte in einem ersten Ausführungsbeispiel. Das Kochmanagement-Verfahren 100 umfasst dabei ein Herstellen 101 einer Geräteverbindung 30 zwischen einer Küchenmaschine 1 und einem Unterhaltungsgerät 2 und ein Abrufen von Informationen 102 über ein Unterhaltungsprogramm 201 von dem Unterhaltungsgerät 2. Zusätzlich oder alternativ kann vorgesehen sein, dass ein Herstellen 103 einer Netzwerkverbindung 31 der Küchenmaschine 1 mit einem Server 3 erfolgt und ein Abrufen 104 von Daten 20 von dem Server 3. Die Daten 20 weisen insbesondere Informationen über ein Unterhaltungsprogramm 201 und/oder Navigationsdaten 21 eines Benutzers auf. Dadurch können die Informationen über das Unterhaltungsprogramm 201 von der Küchenmaschine 1 direkt über die Geräteverbindung 30 vom Unterhaltungsgerät 2 oder über die Netzwerkverbindung 31 bezogen werden. Vorzugsweise anschließend erfolgt ein Bestimmen 105 des Unterhaltungsprogramms 201 des Unterhaltungsgerätes 2, welches der Benutzer nutzen möchte. Dies kann beispielsweise eine Benutzerinteraktion umfassen, wobei ein Erhalten 105.1 einer Auswahl durch den Benutzer und/oder ein Erhalten 105.2 einer Beeinflussung der Planung eines Kochvorgangs 200 vorgesehen sein kann. Somit kann der Benutzer der Küchenmaschine 1 sein gewünschtes Unterhaltungsprogramm 201 mitteilen, so dass über die weiteren Schritte des Kochmanagement-Verfahrens 100 das Zubereiten von Speisen zumindest in Hinblick auf die Zeitplanung am Unterhaltungsprogramm 201 orientiert werden kann. Basierend auf dem Unterhaltungsprogramm 201 ist ferner ein Bestimmen 106 eines Planungsintervalls 202 vorgesehen, während welchem der Benutzer zum Genuss des Unterhaltungsprogramms 201 zumindest teilweise an das Unterhaltungsgerät 2 gebunden ist. So ist es beispielsweise denkbar, dass aus der Auswahl des Unterhaltungsprogramms 201 Informationen über Unterbrechungen des Unterhaltungsprogramms 201 extrahiert werden. Insbesondere kann das Planungsintervall 202 mehrere Unterhaltungsprogramme 201 mit einem Leerlauf in der Zwischenzeit berücksichtigen. In Abhängigkeit von dem Planungsintervall 202 wird schließlich ein Erstellen 107 einer Planung des Kochvorgangs 200 durchgeführt.

Fig. 2 zeigt hierzu eine schematische Darstellung einer zeitlichen Planung über eine Zeit t, wobei das Planungsintervall 202 an zwei Unterhaltungsprogrammen 201 orientiert ist, welche der Benutzer ausgewählt hat. Für den Kochvorgang 200 wird in Abhängigkeit von dem Planungsintervall 202 daraufhin ein Startzeitpunkt 200.1 erstellt, an welchen vorzugsweise der erste Schritt zum Zubereiten einer Mahlzeit nach einem vorgegebenen Rezept ausgeführt wird. Ferner ist eine Zwischenstufe 200.2 vorgesehen, im Rahmen welcher eine Benutzerinteraktion notwendig ist, bei welcher der Benutzer z.B. Zutaten zur Küchenmaschine 1 hinzugeben soll. Dazu wurde die Zwischenstufe 200.2 korrespondierend zur Zeit zwischen den Unterhaltungsprogrammen 201 gelegt, so dass die Zwischenstufe 200.2 bereits erreicht ist, wenn das erste Unterhaltungsprogramm 201 endet, der Benutzer aber genügend Zeit hat, die Benutzerinteraktion vorzunehmen. Weiterhin ist ein Endzeitpunkt 200.2 geplant, welcher mit dem Ende des zweiten Unterhaltungsprogramms 201 korrespondiert, so dass der Benutzer im Anschluss die fertige Speise zu sich nehmen kann. Somit ist ein effizientes und komfortables Vorgehen geschaffen, welches den Kochvorgang 200 in den Alltag, insbesondere in die Freizeit des Benutzers, integriert. Vorzugsweise können ergänzend weitere Daten 20 bei der Bestimmung 106 des Planungsintervalls 202 und/oder bei der Erstellung 107 der Planung des Kochvorgangs 200 hinzugezogen werden.

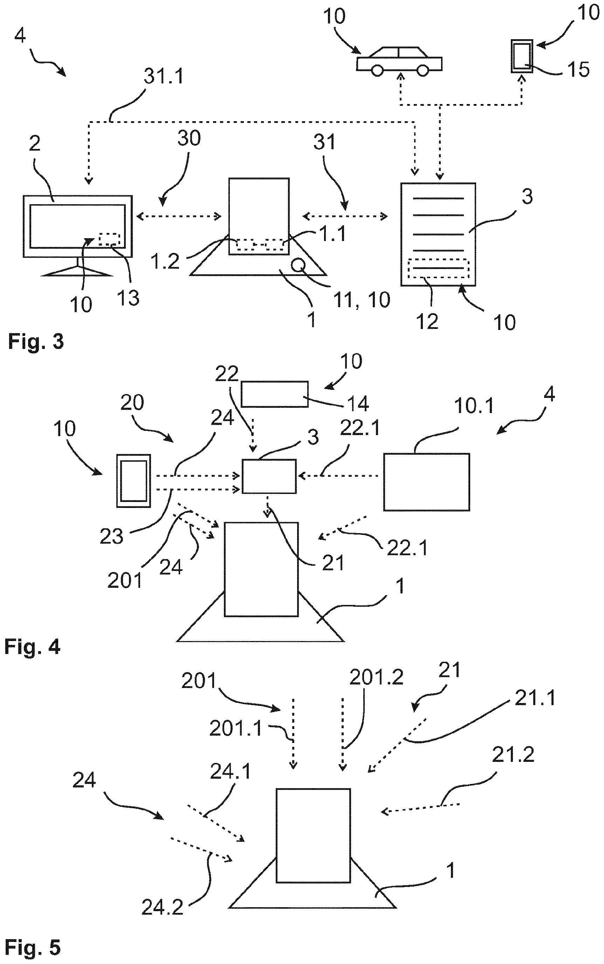

Figur 3 zeigt ein erfindungsgemäßes System 4 aufweisend eine Küchenmaschine 1 und einen Server 3 in einem weiteren Ausführungsbeispiel in schematischer Darstellung. Dabei steht die Küchenmaschine 1 über eine Geräteverbindung 30 mit einem Unterhaltungsgerät 2 und über eine Netzwerkverbindung 31 mit dem Server 3 in Kommunikationsverbindung. Ferner weist die Küchenmaschine 1 eine Kommunikationsschnittstelle 1.1 auf, um die Geräteverbindung 30 und/oder die Netzwerkverbindung 31 herzustellen. Über die Kommunikationsschnittstelle 1.1 erhält eine Steuereinheit 1.2 der Küchenmaschine 1 schließlich Daten 20, welche beispielsweise Informationen über ein Unterhaltungsprogramm 201 enthalten können, um ein erfindungsgemäßes Kochmanagement-Verfahren 100, insbesondere nach dem ersten Ausführungsbeispiel, zu initiieren oder durchzuführen. Dabei kann vorgesehen sein, dass von der Küchenmaschine 1 lediglich einige Verfahrensschritte durchgeführt werden, während andere auf dem Server 3 durchgeführt werden. Um Informationen über das Unterhaltungsprogramm 201 zur Planung des Kochvorgangs 200 zu erhalten sind über die Geräteverbindung 30 und/oder die Netzwerkverbindung 31 diverse Informationsquellen 10 zugänglich. So stellt das Unterhaltungsgerät 2 einen elektronischen Programmführer 13 zur Verfügung, welcher eine Auswahl möglicher Unterhaltungsprogramme 201 und/oder zeitliche Informationen über diese Unterhaltungsprogramme 201 bereitstellt. Eine weitere Informationsquelle 10 umfasst eine Benutzerschnittstelle 10 an der Küchenmaschine 1 zur manuellen Eingabe und/oder Auswahl des gewünschten Unterhaltungsprogramms 201. Ferner stellt der Server 3 eine Unterhaltungshistorie 12 zur Verfügung, welche insbesondere mit einem Benutzerkonto verknüpft ist und in welcher Daten zuletzt angesehener Unterhaltungsprogramme gespeichert sind. Dadurch kann ein voraussichtlich vom Benutzer gewünschtes Unterhaltungsprogramm 201 mit einer bestimmten Wahrscheinlichkeit errechnet werden. Insbesondere steht ferner das Unterhaltungsgerät 2 über eine weitere Netzwerkverbindung 31.1 mit dem Server 3 in Kommunikationsverbindung, so dass der Server 3 direkt Informationen über die Unterhaltungsprogramme 201 ermitteln kann. Ferner kann der Server mit weiteren Informationsquellen 10, wie beispielsweise einem Fahrzeug und/oder einem mobilen Endgerät, wie einem Smartphone, des Benutzers in Kommunikationsverbindung stehen. Über das mobile Endgerät kann beispielsweise ein Benutzerkalender 15 bereitgestellt werden, über welchen Aktivitätsdaten 24 bei der Planung des Kochvorgangs 200 berücksichtigt werden können. Über das Fahrzeug können ferner beispielsweise Navigationsdaten 21 bereitgestellt werden, welche ebenfalls für die Planung des Kochvorgangs 200 verarbeitet werden können.

Fig. 4 zeigt ein System 4 mit einer Küchenmaschine 1 in einem weiteren Ausführungsbeispiel in schematischer Darstellung. Dabei bezieht die Küchenmaschine 1 Daten 20 unterschiedlicher Informationsquellen 10, welche in einer Planung eines Kochvorgangs 200 berücksichtigt werden. So werden Aktivitätsdaten 24 über Freizeitaktivitäten, wie Theaterbesuche oder dergleichen, eines Benutzers mit einem Server 3 und/oder der Küchenmaschine 1 über eine Informationsquelle 10 in Form eines Smartphones des Benutzers ausgetauscht. Ferner kann der Benutzer über das Smartphone der Küchenmaschine 1 und/oder dem Server 3 ein gewünschtes Unterhaltungsprogramm 201 mitteilen. Darüber hinaus erhält der Server 3 über das Smartphone einen Standort 23 des Benutzers, um diesen mit Verkehrsdaten 22, welche über einen Internetdienst 14 bezogen werden, und öffentlichen Verkehrsdaten 22.1, welche von einer öffentlichen Informationsquelle 10.1 bezogen werden, abgleichen zu können. Diese Daten 22, 22.1, 23 können vom Server 3 gebündelt und/oder weiterverarbeitet werden, um der Küchenmaschine 1 Navigationsdaten 21 des Benutzers zur Verfügung zu stellen. Daraus kann beispielsweise ein Ankunftszeitpunkt des Benutzers ermittelt werden und damit abgeglichen werden, ob beispielsweise vor Beginn des Unterhaltungsprogramms 201 noch ausreichend Zeit für den Kochvorgang 200 verbleibt, oder ob der Kochvorgang 200 nach und/oder während des Unterhaltungsprogramms 201 ablaufen soll.

Figur 5 zeigt eine Küchenmaschine 1 in einem weiteren Ausführungsbeispiel. Dabei erhält die Küchenmaschine 1 Daten 20 mehrerer Benutzer, wobei beispielsweise jeweils den Benutzern zugeordnete Navigationsdaten 21.1, 21.2, Aktivitätsdaten 24.1, 24.2 und/oder jeweils von den einzelnen Benutzern gewünschte Unterhaltungsprogramme 201.1, 201.2 übertragen werden können. Dadurch kann auch für eine Benutzergemeinschaft ein Kochmanagement möglichst effizient erfolgen und auf die Bedürfnisse der einzelnen Benutzer derart abgestimmt werden, dass diese nicht oder nur geringfügig terminlich mit den Bedürfnissen anderer Benutzer kollidieren.

Die voranstehende Erläuterung der Ausführungsformen beschreibt die vorliegende Erfindung ausschließlich im Rahmen von Beispielen.

### Bezugszeichenliste

- 1: Küchenmaschine
- 1.1: Kommunikationsschnittstelle
- 1.2: Steuereinheit
- 2: Unterhaltungsgerät
- 3: Server
- 4: System

- 10: Informationsquelle
- 10.1: öffentliche Informationsquelle
- 11: Benutzerschnittstelle
- 12: Unterhaltungshistorie
- 13: elektronischer Programmführer
- 14: Internetdienst
- 15: Benutzerkalender

- 20: Daten
- 21: Navigationsdaten
- 22: Verkehrsdaten
- 22.1: öffentliche Verkehrsdaten
- 23: Standort
- 24: Aktivitätsdaten

- 30: Geräteverbindung
- 31: Netzwerkverbindung
- 31.1: weitere Netzwerkverbindung

- 100: Kochmanagement-Verfahren
- 101: Herstellen von 30
- 102: Abrufen von Informationen
- 103: Herstellen von 31
- 104: Abrufen von 20
- 105: Bestimmen von 201
- 105.1: Erhalten einer Auswahl von 201
- 105.2: Erhalten einer Beeinflussung der Planung von 200
- 106: Bestimmen von 202
- 107: Erstellen der Planung von 200

- 200: Kochvorgang
- 200.1: Startzeitpunkt
- 200.2: Zwischenstufe
- 200.3: Endzeitpunkt
- 201: Unterhaltungsprogramm
- 202: Planungsintervall

- t: Zeit

## Patentansprüche

1. Kochmanagement-Verfahren (100) zur Planung eines Kochvorgangs (200) einer Küchenmaschine (1) umfassend die folgenden Schritte:
- Bestimmen (105) eines Unterhaltungsprogramms (201) eines Unterhaltungsgerätes (2),
- Bestimmen (106) eines Planungsintervalls (202), in welchem zumindest ein Benutzer der Küchenmaschine (1) zum Genuss des Unterhaltungsprogramms (201) zumindest teilweise an das Unterhaltungsgerät (2) gebunden ist,
- Erstellen (107) einer Planung des Kochvorgangs (200) in Abhängigkeit von dem Planungsintervall (202).

2. Kochmanagement-Verfahren (100) nach Anspruch 1,
**dadurch gekennzeichnet,**
**dass** das Unterhaltungsprogramm (201) ein Streaming-Angebot, ein TV-Programm, ein Computerspiel und/oder ein Radioprogramm umfasst.

3. Kochmanagement-Verfahren (100) nach Anspruch 1 oder 2,
**dadurch gekennzeichnet,**
**dass** das Bestimmen (106) des Planungsintervalls (202) durch eine Auswertung zumindest einer Informationsquelle (10) erfolgt, insbesondere wobei die zumindest eine Informationsquelle (10) eine Benutzerschnittstelle (11), eine Unterhaltungshistorie (12), einen elektronischen Programmführer (13), einen Internetdienst (14) und/oder einen Benutzerkalender (15) umfasst.

4. Kochmanagement-Verfahren (100) nach einem der vorhergehenden Ansprüche,
**dadurch gekennzeichnet,**
**dass** das Erstellen der Planung des Kochvorgangs (200) das Bestimmen eines Startzeitpunktes (200.1) zum Start des Kochvorgangs (200) umfasst, insbesondere wobei der Startzeitpunkt (200.1) als Vorschlag ausgegeben wird und/oder der Kochvorgang (200) zu dem Startzeitpunkt (200.1) automatisch gestartet wird.

5. Kochmanagement-Verfahren (100) nach einem der vorhergehenden Ansprüche,
**dadurch gekennzeichnet,**
**dass** das Erstellen der Planung des Kochvorgangs (200) das Bestimmen eines Endzeitpunktes (200.3) zum Fertigstellen des Kochvorgangs (200) umfasst, insbesondere wobei der Endzeitpunkt (200.3) als Vorschlag ausgegeben wird und/oder der Kochvorgang (200) zu dem Endzeitpunkt (200.3) automatisch abgeschlossen wird.

6. Kochmanagement-Verfahren (100) nach einem der vorhergehenden Ansprüche,
**dadurch gekennzeichnet,**
**dass** das Erstellen (107) der Planung des Kochvorgangs (200) das Bestimmen von zumindest einer Zwischenstufe (200.2) des Kochvorgangs (200) umfasst, in welcher eine Benutzerinteraktion zur weiteren Durchführung des Kochvorgangs (200) erforderlich ist, insbesondere wobei der Benutzer automatisch über ein tatsächliches und/oder planmäßiges Erreichen der zumindest einen Zwischenstufe (200.2) benachrichtigt wird.

7. Kochmanagement-Verfahren (100) nach einem der vorhergehenden Ansprüche,
**dadurch gekennzeichnet,**
**dass** das Bestimmen (106) des Planungsintervalls (202) und/oder das Erstellen der Planung des Kochvorgangs (200) in Abhängigkeit von Navigationsdaten (21) erfolgt, insbesondere wobei die Navigationsdaten (21) Verkehrsdaten (22) und/oder einen Standort (23) des zumindest einen Benutzers umfassen.

8. Kochmanagement-Verfahren (100) nach Anspruch 7,
**dadurch gekennzeichnet,**
**dass** die Navigationsdaten (21) öffentliche Verkehrsdaten (22.1) umfassen, insbesondere wobei die öffentlichen Verkehrsdaten (22.1) aus einem öffentlichen Informationssystem (10.1) gewonnen werden.

9. Kochmanagement-Verfahren (100) nach einem der vorhergehenden Ansprüche,
**dadurch gekennzeichnet,**
**dass** das Bestimmen (106) des Planungsintervalls (202) und/oder das Erstellen der Planung des Kochvorgangs (200) in Abhängigkeit von Aktivitätsdaten (24) erfolgt, insbesondere wobei die Aktivitätsdaten (24) zur zumindest teilweisen Bestimmung der Navigationsdaten (21) herangezogen werden.

10. Kochmanagement-Verfahren (100) nach einem der vorhergehenden Ansprüche,
**dadurch gekennzeichnet,**
**dass** die Aktivitätsdaten (24), Navigationsdaten (21) und/oder unterschiedliche Unterhaltungsprogramme (201) mehreren Benutzern zugeordnet sind, wobei das Bestimmen des Planungsintervalls (202) und/oder das Planen des Kochvorgangs (200) für eine Benutzergemeinschaft erfolgt.

11. Kochmanagement-Verfahren (100) nach einem der vorhergehenden Ansprüche,
**dadurch gekennzeichnet,**
**dass** das Kochmanagement-Verfahren (100) folgende Schritte umfasst:
- Herstellen (101) einer Geräteverbindung (30) zwischen der Küchenmaschine (1) und dem Unterhaltungsgerät (2),
- Abrufen (102) von Informationen über das Unterhaltungsprogramm (201) von dem Unterhaltungsgerät (2) über die Geräteverbindung (30).

12. Kochmanagement-Verfahren (100) nach einem der vorhergehenden Ansprüche,
**dadurch gekennzeichnet,**
**dass** das Kochmanagement-Verfahren (100) folgende Schritte umfasst:
- Herstellen (103) einer Netzwerkverbindung (31) der Küchenmaschine (1) mit einem Server (3),
- Abrufen (104) von Daten (20) von dem Server (3), wobei die Daten (20) Informationen über das Unterhaltungsprogramm (12) und/oder die Navigationsdaten (21) umfassen.

13. Kochmanagement-Verfahren (100) nach einem der vorhergehenden Ansprüche,
**dadurch gekennzeichnet,**
**dass** das Bestimmen (105) des Unterhaltungsprogramms (201) zumindest einen der folgenden Schritte umfasst:
- Erhalten (105.1) einer Auswahl des Unterhaltungsprogramms (201) durch den zumindest einen Benutzer,
- Erhalten (105.2) einer Beeinflussung der Planung des Kochvorgangs (200) durch den zumindest einen Benutzer.

14. Küchenmaschine (1) zum Zubereiten von Speisen,
aufweisend eine Steuereinheit (1.2) zur elektronischen Datenverarbeitung,
**dadurch gekennzeichnet, dass** die Steuereinheit (1.2) so ausgebildet und programmiert ist,
dass durch die Steuereinheit (1.2) ein Kochmanagement-Verfahren (100) nach einem der vorhergehenden Ansprüche durchführbar ist.

15. System (4) zum Durchführen eines Kochvorgangs (200), aufweisend
eine Küchenmaschine (1), insbesondere nach Anspruch 14, zum Zubereiten von Speisen,
einen Server (3), der mit der Küchenmaschine (1) in Kommunikationsverbindung bringbar ist,
**dadurch gekennzeichnet, dass** der Server (3) so ausgebildet und programmiert ist,
dass ein Kochmanagement-Verfahren (100) nach einem der vorhergehenden Ansprüche 1 bis 13 durch den Server (3) durchführbar ist.

## Claims

1. A cooking management method (100) for scheduling a cooking operation (200) of a food processor (1) comprising the following steps:
- Determining (105) an entertainment program (201) of an entertainment device (2),
- Determining (106) a scheduling interval (202) in which at least a user of the food processor (1) is at least partially bound to the entertainment device (2) for enjoying the entertainment program (201),
- Creating (107) a schedule of the cooking operation (200) as a function of the scheduling interval (202).

2. Cooking management method (100) according to claim 1,
**characterized in that**
the entertainment program (201) comprises a streaming offer, a TV program, a computer game and/or a radio program.

3. Cooking management method (100) according to claim 1 or 2,
**characterized in that**
determining (106) of the scheduling interval (202) is carried out by an evaluation of at least one information source (10), in particular the at least one information source (10) comprising a user interface (11), an entertainment history (12), an electronic program guide (13), an internet service (14) and/or a user calendar (15).

4. Cooking management method (100) according to any one of the preceding claims,
**characterized in that**
creating of the schedule of the cooking operation (200) comprises determining of a starting time (200.1) for starting the cooking operation (200), in particular the starting time (200.1) being output as a suggestion and/or the cooking operation (200) being started automatically at the starting time (200.1).

5. Cooking management method (100) according to any one of the preceding claims,
**characterized in that**
creating of the schedule of the cooking operation (200) comprises determining of an end time (200.3) for the completion of the cooking operation (200), in particular wherein the end time (200.3) is output as a suggestion and/or the cooking operation (200) is automatically completed at the end time (200.3).

6. Cooking management method (100) according to any one of the preceding claims,
**characterized in that**
creating (107) the schedule of the cooking operation (200) comprises determining at least one intermediate stage (200.2) of the cooking operation (200) in which a user interaction is required for further execution of the cooking operation (200), in particular wherein the user is automatically notified of an actual and/or scheduled reaching of the at least one intermediate stage (200.2).

7. Cooking management method (100) according to any one of the preceding claims,
**characterized in that**
determining (106) of the scheduling interval (202) and/or creating of the schedule of the cooking operation (200) is carried out as a function of navigation data (21), in particular the navigation data (21) comprising traffic data (22) and/or a location (23) of the at least one user.

8. Cooking management method (100) according to claim 7,
**characterized in that**
the navigation data (21) comprise public traffic data (22.1), in particular the public traffic data (22.1) being obtained from a public information system (10.1).

9. Cooking management method (100) according to any one of the preceding claims,
**characterized in that**
determining (106) of the scheduling interval (202) and/or creating of the schedule of the cooking operation (200) is carried out as a function of activity data (24), in particular the activity data (24) being used to at least partially determine the navigation data (21).

10. Cooking management method (100) according to any one of the preceding claims,
**characterized in that**
the activity data (24), navigation data (21) and/or different entertainment programs (201) are assigned to a plurality of users, wherein determining of the scheduling interval (202) and/or the schedule of the cooking operation (200) is being carried out for a community of users.

11. Cooking management method (100) according to any one of the preceding claims,
**characterized in that**
the cooking management method (100) comprises the following steps:
- Establishing (101) an appliance connection (30) between the food processor (1) and the entertainment device (2),
- Retrieving (102) information about the entertainment program (201) from the entertainment device (2) via the device connection (30).

12. Cooking management method (100) according to any one of the preceding claims,
**characterized in that**
the cooking management method (100) comprises the following steps:
- Establishing (103) a network connection (31) of the food processor (1) with a server (3),
- Retrieving (104) data (20) from the server (3), the data (20) comprising information about the entertainment program (12) and/or the navigation data (21).

13. Cooking management method (100) according to any one of the preceding claims,
**characterized in that**
determining (105) the entertainment program (201) comprises at least one of the following steps:
- Obtaining (105.1) a selection of the entertainment program (201) by the at least one user,
- Obtaining (105.2) an influence of the at least one user on the schedule of the cooking operation (200).

14. Food processor (1) for preparing food,
comprising a control unit (1.2) for electronic data processing,
**characterized in that**
the control unit (1.2) is designed and programmed in such a way that a cooking management method (100) according to one of the preceding claims can be carried out by the control unit (1.2).

15. System (4) for performing a cooking operation (200), comprising
a food processor (1), in particular according to claim 14, for preparing food,
a server (3) which can be brought into communication with the food processor (1),
**characterized in that**
the server (3) is configured and programmed such that a cooking management method (100) according to any one of the preceding claims 1 to 13 is performable by the server (3).

## Revendications

1. Procédé de gestion de cuisson (100) pour la planification d'une opération de cuisson (200) d'un processeur alimentaire (1) comprenant les étapes suivantes :
- Détermination (105) d'un programme de divertissement (201) d'un dispositif de divertissement (2),
- Détermination (106) d'un intervalle de planification (202) dans lequel au moins un utilisateur du processeur alimentaire (1) est au moins partiellement attaché au dispositif de divertissement (2) pour profiter du programme de divertissement (201),
- Création (107) d'une planification de l'opération de cuisson (200) en fonction de l'intervalle de planification (202).

2. Procédé de gestion de la cuisson (100) selon la revendication 1,
**caractérisé en ce que**
le programme de divertissement (201) comprend une offre de streaming, un programme de télévision, un jeu d'ordinateur et/ou un programme de radio.

3. Procédé de gestion de la cuisson (100) selon la revendication 1 ou 2,
**caractérisé en ce que**
la détermination (106) de l'intervalle de planification (202) est effectuée par une évaluation d'au moins une source d'information (10), en particulier dans laquelle la au moins une source d'information (10) comprend une interface utilisateur (11), un historique de divertissement (12), un guide de programme électronique (13), un service Internet (14) et/ou un calendrier utilisateur (15).

4. Procédé de gestion de la cuisson (100) selon l'une quelconque des revendications précédentes,
**caractérisé en ce que**
la création de la planification de l'opération de cuisson (200) comprend la détermination d'un moment de démarrage (200.1) pour le démarrage de l'opération de cuisson (200), en particulier le moment de démarrage (200.1) étant émis sous forme de suggestion et/ou l'opération de cuisson (200) étant démarrée automatiquement au moment de démarrage (200.1).

5. Procédé de gestion de la cuisson (100) selon l'une quelconque des revendications précédentes,
**caractérisé en ce que**
la création de la planification de l'opération de cuisson (200) comprend la détermination d'une heure de fin (200.3) pour l'achèvement de l'opération de cuisson (200), en particulier dans laquelle l'heure de fin (200.3) est sortie comme une suggestion et/ou l'opération de cuisson (200) est automatiquement achevée à l'heure de fin (200.3).

6. Procédé de gestion de la cuisson (100) selon l'une quelconque des revendications précédentes,
**caractérisé en ce que**
la création (107) de la planification de l'opération de cuisson (200) comprend la détermination d'au moins une étape intermédiaire (200.2) de l'opération de cuisson (200) dans laquelle une interaction de l'utilisateur est requise pour la poursuite de l'exécution de l'opération de cuisson (200), en particulier dans laquelle l'utilisateur est automatiquement notifié d'une atteinte réelle et/ou programmée de l'au moins une étape intermédiaire (200.2).

7. Procédé de gestion de la cuisson (100) selon l'une quelconque des revendications précédentes,
**caractérisé en ce que**
la détermination (106) de l'intervalle de planification (202) et/ou la création de la planification de l'opération de cuisson (200) est effectuée en fonction de données de navigation (21), en particulier les données de navigation (21) comprenant des données de trafic (22) et/ou une localisation (23) de l'au moins un utilisateur.

8. Procédé de gestion de la cuisson (100) selon la revendication 7,
**caractérisé en ce que**
les données de navigation (21) comprennent des données de trafic public (22.1), en particulier dans lequel les données de trafic public (22.1) sont obtenues à partir d'un système d'information public (10.1).

9. Procédé de gestion de la cuisson (100) selon l'une quelconque des revendications précédentes,
**caractérisé en ce que**
la détermination (106) de l'intervalle de planification (202) et/ou la création de la planification de l'opération de cuisson (200) a lieu en fonction de données d'activité (24), en particulier les données d'activité (24) étant utilisées pour déterminer au moins partiellement les données de navigation (21).

10. Procédé de gestion de la cuisson (100) selon l'une quelconque des revendications précédentes,
**caractérisé en ce que**
les données d'activité (24), les données de navigation (21) et/ou différents programmes de divertissement (201) sont attribués à plusieurs utilisateurs, la détermination de l'intervalle de planification (202) et/ou la planification du opération de cuisson (200) étant effectuée pour une communauté d'utilisateurs.

11. Procédé de gestion de la cuisson (100) selon l'une quelconque des revendications précédentes,
**caractérisé en ce que**
le procédé de gestion de la cuisson (100) comprend les étapes suivantes :
- Établissement (101) d'une connexion du dispositif (30) entre le processeur alimentaire (1) et le dispositif de divertissement (2),
- Récupération (102) d'informations sur le programme de divertissement (201) à partir du dispositif de divertissement (2) via la connexion du dispositif (30).

12. Procédé de gestion de la cuisson (100) selon l'une quelconque des revendications précédentes,
**caractérisé en ce que**
le procédé de gestion de la cuisson (100) comprend les étapes suivantes :
- Établissement (103) d'une connexion réseau (31) entre le processeur alimentaire (1) avec un serveur (3),
- Récupérer (104) des données (20) à partir du serveur (3), les données (20) comprenant des informations sur le programme de divertissement (12) et/ou les données de navigation (21).

13. Procédé de gestion de la cuisson (100) selon l'une quelconque des revendications précédentes,
**caractérisé en ce que**
la détermination (105) du programme de divertissement (201) comprend au moins une des étapes suivantes :
- Obtention (105.1) d'une sélection du programme de divertissement (201) par l'au moins un utilisateur,
- Obtention (105.2) d'une influence de l'au moins un utilisateur sur la planification de l'opération de cuisson (200).

14. Processeur alimentaire (1) pour la préparation des aliments,
comprenant une unité de commande (1.2) pour le traitement électronique des données,
**caractérisé en ce que**
l'unité de commande (1.2) est conçue et programmée pour qu'un procédé de gestion de cuisson (100) selon l'une des revendications précédentes puisse être mis en oeuvre par l'unité de commande (1.2).

15. Système (4) pour réaliser une opération de cuisson (200), comprenant
un processeur alimentaire (1), en particulier selon la revendication 14, pour préparer des aliments,
un serveur (3) qui peut être mis en communication avec le processeur alimentaire (1),
**caractérisé en ce que**
le serveur (3) est conçu et programmé pour qu'un procédé de gestion de cuisson (100) selon l'une quelconque des revendications précédentes 1 à 13 puisse être mis en œuvre par le serveur (3).
